(19) Europäisches Patentamt / European Patent Office / Office européen des brevets

(11) EP 2 226 707 B1

## (12) EUROPEAN PATENT SPECIFICATION

(45) Date of publication and mention
of the grant of the patent:
**09.01.2013   Bulletin 2013/02**

(51) Int Cl.:
*G06F 3/038* (2013.01)     *G06F 3/042* (2006.01)

(21) Application number: **09003304.4**

(22) Date of filing: **06.03.2009**

(54) **Adaptive pointing - implicit gain adaptation for absolute pointing devices**

Adaptives Zeigen - implizite Zuwachsanpassung für absolute Zeigevorrichtungen

Pointage adaptif - Adaptation implicite du gain pour appareil de pointage absolu

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**08.09.2010   Bulletin 2010/36**

(73) Proprietor: **Universität Konstanz**
**78464 Konstanz (DE)**

(72) Inventors:
• **König, Werner**
**88348 Bad Saulgau (DE)**
• **Reiterer, Harald**
**78465 Konstanz-Dingelsdorf (DE)**
• **Gerken, Jens**
**78467 Konstanz (DE)**

(74) Representative: **Müller-Boré & Partner**
**Patentanwälte**
**Grafinger Straße 2**
**81671 München (DE)**

(56) References cited:
**US-A1- 2006 073 438**

• JIANG ET AL: "Improving Awareness with Remote Control Point Movement Prediction in Real-Time Collaborative Graphics Editing Systems" IJCSNS INTERNATIONAL JOURNAL OF COMPUTER SCIENCE AND NETWORK SECURITY, vol. 6, no. 3A, March 2006 (2006-03), pages 203-207, XP002539680 Retrieved from the Internet: URL:http://paper.ijcsns.org/07_book/ 200603 /200603A29.pdf> [retrieved on 2009-08-03]
• FREES ET AL: "PRISM Interaction for Enhancing Control in Immersive Virtual Environments" ACM Transactions on Computer-Human Interaction ACM USA, vol. 14, no. 1, May 2007 (2007-05), pages 1-31, XP002539681 ISSN: 1073-0516
• CASIEZ G ET AL: "The impact of control-display gain on user performance in pointing tasks" HUMAN-COMPUTER INTERACTION, LAWRENCE ERLBAUM ASSOCIATES, HILLSDALE, NJ, US, vol. 23, no. 3, 1 July 2008 (2008-07-01), pages 215-250, XP008108696 ISSN: 0737-0024

## Description

The present invention refers to a method, a pointing system and a computer program product for controlling a pointing marker on a display screen.

With a steadily growing diversity of application domains beyond standard desktop usage, absolute pointing devices are becoming more and more favored. In particular, in situations, in which users want or need to interact on a large screen and from a flexible distant position, input devices with an absolute mapping are suitable alternatives to relative devices such as the mouse. Absolute devices typically use a position-to-position mapping, while a computer mouse often uses a velocity-to-velocity mapping as transfer function between the input device and the display pointer. Thus, in absolute devices there is a close coupling between the display space, where the virtual pointing action takes place and the motor space, where the user manipulates the input device. As a result the user benefits of a more natural and convenient pointing experience and easier hand-eye coordination. The user expects that a marker, such as a light spot, is in line with a pointer tool, e.g. laser pointer. Hence, the pointer motion in display space is proportional to the movement in motor space.

Using a relative device such as a mouse or a touch pad, it is often hard to keep track of the cursor due to the decoupling of motor and display space and the non-linear pointer acceleration. This is particularly the case in combination with small cursor icons presented on a large, high resolution display or controlled from a distant position. Due to the direct mapping of absolute pointing devices, the problem of keeping track of the cursor does not exist, since it is always in line with the user's finger, stylus, laser pointer or any other absolute device.

Taking a look at consumer electronics, absolute pointing devices have been riding on a wave of success lately, with the Nintendo Wii Remote and the EyeToy for Sony's Playstation being the popular frontrunners. These kinds of devices offer a very natural way of interaction with a large degree of freedom in terms of movement and position. Besides home entertainment, there are various application domains e.g. in the field of ubiquitous computing, visual analytics, collaborative environments and interactive exhibitions, where users need more flexibility to interact. Especially in combination with large, high-resolution displays, input devices are required which provide more user mobility to work up close with detailed information and also enable the user to step back and manipulate the contents of the entire display space.

However, a common problem shared by all absolute input devices controlled from a distance, particularly in combination with high-resolution displays, is pointing precision. Myers et al. in "Interacting at a distance: measuring the performance of laser pointers and other devices", Proc. CHI '02, pages 33-40, 2002 concluded that interaction techniques using laser pointers tend to be imprecise, errorprone, and slow. Vogel et al. in "Distant freehand pointing and clicking on very large, high resolution displays", Proc. UIST'05, pages 33-42, 2005 reported a similar result for their comparison of absolute, relative and hybrid mapping of hand movements. While the absolute technique was significantly faster than the hybrid and the relative one, the high error rates of the absolute mapping prevent it from being a practical technique. In "Position-independent interaction for large high-resolution displays", Proc. IHCI '07, 2007 by König et al. these findings were confirmed by comparing the performance of a conventional mouse to a laser pointer interaction technique for a large high resolution display (4640 × 1920px) by means of an unidirectional tapping test. The error rate for the absolute laser pointer was 15% (3m), which was almost two times higher than the one for the mouse (8%, 3m) and it even deteriorated with increasing distance (20%, 6m).

Specific methods for controlling input devices either for an efficient correction of delay-jitter occurring due to technical imperfection in the data transmission for remote control of a pointing device, or for an improved manipulation of 3D objects are known from Jiang et al. "Improving Awareness with Remote Control Point Movement Prediction in Real-Time Collaborative Graphics Editing Systems", International Journal of Computer Science and Network Security, vol. 6, no. 3A, March 2006, pages 203-207 and from Frees et al. "PRISM Interaction for Enhancing Control in Immersive Virtual Environments" ACM Transactions on Computer-Human Interaction ACM USA, vol. 14, no. 1, May 2007, pages 1-31, respectively.

It is an object of the present invention to improve pointing precision even for high-resolution displays. This problem is solved by a method, a pointing device and a computer program product having the features defined in the independent claims.

Preferred embodiments are defined in the dependent subclaims.

Accordingly, the invention provides a method for controlling a pointing marker on a display screen. This method comprises receiving an input from a pointer element to achieve one or more previous pointing positions and a current or new pointing position in a main operation region of a display space of the display screen. In one aspect, the main operation region of the display space may be formed by or correspond to a central region of the display screen. Preferably, the central region which forms the main operation region is enclosed by a peripheral region that borders on the main operation region. Preferably, the main operation region corresponds to at least 50%, more preferably at least 60% of the area of the display screen. In one aspect the main operation region may correspond to the area of the display screen. Preferably, the main operation region corresponds to at most 95%, more preferably at most 90%, even more preferably at most 80% of the area of the display screen. Preferably, the main operation region corresponds to an area in the range from about 60% to about 90%, more preferably from about 60% to about 80% of the area of the display screen. According to another example the main operation region corresponds to the full area of the display screen.

Preferably, subsequent pointing positions are achieved with a constant sample rate, i.e. at a constant time interval, wherein one or more pointing positions may be stored in a temporary data storage in order to be still available at a time (t) when a new (current) pointing position is achieved. Nevertheless, the invention is not limited to a constant sample rate but, instead, varying time intervals between subsequent sample events may be applied. In a preferred embodiment the input received from the pointer element defines one or more previous pointing positions and a current pointing position in a main operation region of a pointing space (or tracking space) of the pointer element. In this aspect, achieving one or more previous pointing positions and a current pointing position in the main operation region of the display space may comprise mapping the pointing space (or tracking space) of the pointer element to the display space of the display screen to achieve one or more mapped previous pointing positions and a mapped current pointing position. These mapped pointing positions may correspond to the pointing positions in the display space.

In one aspect, the pointer element constitutes an absolute pointing device, such that the pointing positions are absolute positions defined by the absolute pointing device. In particular, the absolute pointing device is characterized by a position-to-position mapping. Thus, the absolute pointing device may comprise a position sensing device, such that many or most or all pointing positions in the display space (i.e. the mapped pointing position) have a reproducible one-to-one correspondence to respective pointing positions in the pointing space, i.e. respective positions and/or orientations of a pointer tool, such as a laser pointer. In one example, the pointing space is mapped to the display space such that a motion of the pointing position in the display space is proportional to the movement of the pointing position in the pointing space.

The pointing space (or tracking space) may be a one-dimensional or a two-dimensional or a three-dimensional space, for example, which is spanned by one, two or three coordinates, for example. The pointing space may be described by Cartesian coordinates, cylindrical coordinates, spherical coordinates, etc. The applied coordinate system may be adapted to the particularities of the functionality and/or geometry of the applied pointer element. If the pointer element defines a planar surface as the pointing space (e.g. a touch panel, a touch screen, a light spot of a laser pointer on a display screen) a two-dimensional Cartesian coordinates may be applied. If the user input by means of a pointer tool is based on a detection of a rotation operation of the pointer tool, polar coordinates, or cylindrical coordinates, or spherical coordinates may be applied. Suitable pointer elements that may be applied in connection with the present invention may be based on freehand pointing with computer vision technique, eye- and/or head-tracking, tracking of body parts or the whole body, pointing with data gloves, 2D/3D flysticks, digital pen and/or stylus interaction, touch/pressure sensitive surfaces (e.g. Microsoft Surface, Apple iPhone), Nintendo Wii, Sony EyeToy, Pointing with cell phones in combination with ambient displays, and/or laser pointer interaction, for example. In a preferred embodiment the display space may spatially coincide with the pointing space, i.e. the user may directly or indirectly operate on the area of the display screen during the absolute pointing operation, such as a touch screen or optical detection of (visible or invisible) light spot of a pointer, such as a laser pointer, on a display screen, for example.

The method further comprises determining a pointing displacement of the current pointing position (also referred to as new pointing position) as compared to one or more of the previous pointing positions. The pointing displacement may correspond to a change of the pointing position between the last previous sample time and the current (latest) sample time. In a preferred embodiment this change (displacement) of the pointing position may be determined as a change of the pointing position in the display space, i.e. as a change of the mapped pointing position. In another example, the pointing displacement is determined as a change of the pointing position in the pointing space.

Moreover, the method comprises determining a velocity of the pointer element and/or the pointing position. In one preferred embodiment the velocity may be determined in the pointing space. In particular, the velocity may be determined based on the change of the pointing position in the pointing space (i.e. the pointing displacement in the pointing space) multiplied by the sample rate, i.e. the change of the pointing position from the last previous pointing position to the current pointing position in the pointing space divided by the time difference between the sample times of the last previous and the current sample event. In another preferred embodiment, the velocity may be determined in the display space. In particular, the velocity may be determined based on the change of the pointing position in the display space (i.e. the pointing displacement in the display space) multiplied by the sample rate, i.e. the change of the pointing position from the last previous pointing position to the current pointing position in the display space divided by the time difference between the sample times of the last previous and the current sample event. In yet another preferred embodiment the velocity may be determined based on a detected acceleration of the pointer tool by means of an accelerations sensor comprised in the pointer tool. In yet another example, the velocity may be determined as a mean value of absolute values of velocities evaluated for a plurality of previous sample events. In particular, if $t$ denotes the current sample event and $v_i$ is the velocity determined from the difference between the pointing position at the $(t-i)$-th sample event and the $(t-i+1)$-th sample event divided by the time difference between these sample events for $i=1..n,$ then the velocity may be determined by taking the mean of the absolute values of $v_i$ for $i=1..n$.

Furthermore, the method comprises determining a pointing deviation of the current pointing position and/or the one or more previous pointing positions from a previous marker position of the pointing marker in the display space. In a preferred embodiment, the pointing deviation is determined as the deviation or offset of the current pointing position in the display space (i.e. mapped pointing position) from the latest previous marker position in the display space. In another preferred embodiment, the pointing deviation may be determined as the deviation or offset of the latest previous pointing position in the display space from the latest previous marker position in the display space.

Moreover, the method comprises establishing a current (i.e. a new) marker position of the pointing marker in the display space such that the current marker position is displaced in the display space relative to the previous marker position by a marker displacement, wherein the ratio of the marker displacement over the pointing displacement is determined by a gain parameter which is a continuous function of the determined velocity and the determined pointing deviation $d$ at least for non-vanishing values (i.e. values different from zero) of the velocity $v$ and the pointing deviation $d$, i.e. at least for $v \neq 0$ and $d \neq 0$.

The present invention achieves an automated dynamic adaptation of the Control-Display gain (CD gain = velocity of pointing marker / velocity of pointer tool). The CD gain modulates the mapping between the physical input device and the virtual display pointer (marker). A low CD gain allows for precise targeting even in case of high-density displays or distant interaction. Thus, the present invention turned out to be of particular advantage for distant interaction and when a high-resolution display is applied. In particular, the implicated dynamic adaptation of the CD-gain achieves an improved pointing accuracy without violating users' mental impression of absolute device operation. Comparative experiments with pure absolute pointing using the example of a conventional laser pointer as absolute device showed that the present invention achieved a significant improvement compared to absolute pointing in terms of movement-time (19%), error-rate (63%), and user satisfaction. It was found that the achieved combination of absolute and relative pointing behaviour in an adaptive and unobtrusive way according to present invention results in particular improvements with respect to pointing inaccuracies that are caused by natural hand tremor and limited human pointing precision. In particular, the task of maintaining a limb segment in a constant position produces involuntary muscular contraction with rhythmical oscillations (8-40 Hz), referred to as physiological tremor. When using conventional freehand pointing or absolute pointing devices in midair without a stable rest, natural tremor causes serious noise, which makes accurate pointing and selection difficult or even impossible as the distance between display and user increases. While this imprecision turned out to be a critical issue for controlling a common graphical interface application, the continuously adaptive pointing operation according to the present invention manages to significantly reduce the influence of the physiological tremor. Moreover, the present invention manages to overcome or reduce to the limiting effects of limited hand-eye coordination, restricted motor precision, and limited fine control of the muscle groups involved in the movement.

Thus, the pointing accuracy and speed is clearly improved, particularly for application domains dealing with high-density information spaces e.g. in the field of data mining, information visualization or visual analytics. In particular, noise elimination or reduction for pointing movements is achieved without introducing an high amount of delay or reduction of responsiveness. Furthermore, a smooth interaction by avoiding harsh switching between different control modes with different CD gains is achieved. Thus, abrupt change jitter and lag effect is avoided, which could otherwise confuse the user.

In another aspect, the improvement according to the present invention is particularly advantageous when a large amount of targets has to be dealt with, since the dynamic precision control achieved by the present invention does not require semantic knowledge of the target environment such as target-oriented techniques that use a magnetism-like or stickiness-like metaphor approach by lowering the CD gain when a marker either enters a target or when it comes close to a target, thus creating a fisheye effect, for example. Nevertheless, the present invention could still be combined with such techniques while utilizing the other advantages and improvement achieved by the invention.

In a preferred embodiment, the minimal value of the gain parameter is greater than 0 (>0), preferably at least 0.01 or at least 0.02, more preferably at least 0.05. Preferably, the minimal value of the gain parameter is in the range of about 0.05 to 0.5, preferably in the range of about 0.1 to 0.5, more preferably in the range of about 0.2 to 0.4. Preferably, the maximal value of the gain parameter is greater than 1, preferably in the range of about 1.01 to 1.4, more preferably in the range of about 1.01 to 1.2, most preferably in the range of about 1.01 to 1.1. Both the minimal and the maximal values of the gain parameter are particularly advantageous when the pointing displacement is directly or indirectly determined for the pointing positions in the display space. The preferred minimal value turned out to result in an efficient trade-off between a fast reaction time and a high pointing accuracy, particularly for a high-resolution display with at least 3 megapixels or at least 5 megapixels or even more than 8 megapixels. The preferred maximum value turned out to result in an efficient trade-off between a fast recovery of a pointing deviation (offset recovery) and a smooth and continuously controllable behaviour of the pointing process, such that it behaves similar to an absolute pointing process.

Preferably, the method further comprises determining a dwelling parameter that identifies the mean deviation of the current pointing position from a plurality of previous pointing positions, wherein the current marker position is established such that the gain parameter is a continuous function of the dwelling parameter. The additional consideration of the dwelling parameter allows a more efficient adaptation of the precision when needed. In particular, even if the pointing deviation is high, which could lead to an offset-recovery behaviour through a high value of the gain parameter, and thus a low precision, a low dwelling parameter identifies a situation where the user tries to approach a target (expressed by marginal or no movement). Accordingly, the determination and consideration of the dwelling parameter allows to continuously adapt the gain parameter and, thereby, the pointing precision to this situation. Preferably, a high precision mode of the pointing process may be applied depending on the determined dwelling parameter. In particular, it is preferred that the gain parameter does not change with the determined velocity and the determined pointing deviation if the dwelling parameter is below a lower dwelling reference value (also referred to as first dwelling reference value). Most preferably, a minimum value of the gain parameter is achieved under this condition that may be referred to as high precision mode. Thus, the highest pointing precision is achieve irrespective of a high velocity (e.g. due to unavoidable natural hand tremor) or a high pointing deviation, when a low value of the dwelling parameter identifies a situation where the user tries to approach a target.

Moreover, it is preferred that the gain parameter depends on the pointing deviation, if the dwelling parameter is greater than the lower dwelling reference value and if the absolute value of the determined velocity is lower than an upper velocity reference value (also referred to as second velocity reference value, for example). Thus, a deviation (offset) can be smoothly recovered even at low velocity unless the high precision mode is applied. In particular, the offset-recovery is not limited to high velocities, where low precision is assumed to be required. Instead, the inclusion of continuous recovery of deviation even at low velocities achieves a more natural and continuous pointing behaviour that is closer to the continuous behaviour of an absolute pointing device. In this aspect, the dependence of the gain parameter on the pointing deviation is not limited to low velocities (below the upper velocity reference value). Instead, this dependence is preferred to exist at least in this range. Preferably, a continuous range of pointing deviations may exist such that the gain parameter increases monotonically with increasing pointing deviations within said continuous range of pointing deviations. Within the present description the term "monotonic increase" is used in the commonly known meaning, which specifies a function of a parameter to be "monotonically increasing" with increasing parameter values, if for each pair of parameter values the value of the function for the higher parameter value is not smaller that the value of the function for the lower parameter value.

In a preferred embodiment, the current marker position is established such that the gain parameter does not depend on the determined velocity if the absolute value of the pointing deviation is greater than an upper deviation reference value (also referred to as second deviation reference value). According to this embodiment, a high weight is given to the recovery of a large pointing deviation (offset). In particular, for high offsets the pointing deviation overrules the velocity in view of its influence on the gain parameter. This efficiently keeps the size of the offset small. Nevertheless, it is particularly preferred to combine this feature with the provision of the dwelling parameter described above, in order to still allow a high precision of pointing when trying to approach a target.

In another preferred embodiment the gain parameter does not depend on the deviation for deviations that are smaller than a lower deviation reference value (also referred to as first deviation reference value). Furthermore, it is preferred that the gain parameter does not depend on the pointing velocity for pointing velocities that are smaller than a lower velocity reference value (also referred to as first velocity reference value).

In another preferred embodiment, the gain parameter is a monotonically increasing function of the determined velocity and/or the pointing deviation and/or the dwelling parameter.

In yet another preferred embodiment the gain parameter is determined for each coordinate of the display space and/or the pointing space separately. In particular, it is preferred that determining a pointing displacement comprises determining a horizontal and/or a vertical displacement of the current pointing position as compared to one or more of the previous pointing positions. Moreover, it is preferred that determining a velocity comprises determining a horizontal and/or a vertical component of the velocity. Moreover, it is preferred that determining a pointing deviation comprises determining a horizontal and/or a vertical deviation of the current pointing position and/or one or more previous pointing positions from a previous marker position of the pointing marker in the display space. Furthermore, it is preferred that the current marker position is established such that the current marker position is horizontally and/or vertically displaced relative to the previous marker position by a horizontal and/or a vertical marker displacement, such that the ratio of the horizontal marker displacement over the horizontal pointing displacement is determined by a horizontal gain parameter which is a continuous function of the determined horizontal component of the velocity and the determined horizontal deviation at least for non-vanishing values of the horizontal component of the velocity and the horizontal deviation, and the ratio of the vertical marker displacement over the vertical pointing displacement is determined by a vertical gain parameter which is a continuous function of the determined vertical component of the velocity and the determined vertical deviation at least for non-vanishing values of the vertical component of the velocity and the vertical deviation. This is particularly preferred for improving the pointing dynamic for pointer movements corresponding to horizontal and/or vertical movement of the marker on the display screen, such as movements along rows and columns on the display screen. In particular, this embodiment stabilizes the marker movements within rows and columns in an efficient manner.

Preferably, establishing a current marker position comprises

- providing a gain evaluation function $(g_x)$, which is a monotonic differentiable function of the determined velocity and/or the determined pointing deviation and/or the dwelling parameter;

- if the gain evaluation function is greater than one and the determined pointing displacement has a sign opposite to the sign of the determined pointing deviation, the gain parameter is established as $2-g_x$ based on the gain evaluation function $g_x$; and
- if the gain evaluation function is not greater than 1 or if the determined pointing displacement has a sign that is not opposite to the sign of the determined pointing deviation, the gain parameter is established as the gain evaluation function $g_x$.

Moreover, it is preferred that the method further comprises

- determining a standardized velocity parameter $\hat{v}$ that increases continuously and monotonically from $\hat{v}_{min} = 0$ to $\hat{v}_{max} = 1$ as a function of the determined velocity $v$;
- determining a standardized deviation parameter $\hat{d}$ that increases continuously and monotonically from $\hat{d}_{min} = 0$ to $\hat{d}_{max} = 1$ as a function of the determined deviation $d$ ; and
- determining a standardized dwelling parameter $w$ that increases continuously and monotonically from $\hat{w}_{min} = 0$ to $\hat{w}_{max} = 1$ as a function of the dwelling parameter $w$;

wherein the gain evaluation function is $g(t) = g_{min} + \frac{1}{2}[1 - \cos(m(t) \cdot \pi)](g_{max} - g_{min})$

with a scaling parameter $m = \hat{w}\max(\hat{v},\hat{d})$.

Preferably, the method further comprises receiving an input from a pointer element to achieve a current pointing position in a peripheral region of the display space, wherein the gain evaluation function increases monotonically with decreasing distance of the current pointing position in the peripheral region from a peripheral edge of the display space. For example, when using an input device, such as a pointer element with a tracking area (e.g., the pointing space) which ends at a border corresponding to a border or peripheral edge of the display screen (e.g. for laser pointer interaction at a display screen), considering a border parameter as a measure of the distance of the pointing position from the border ensures that the user is still able to point to information close to the display border. In particular, the increasing gain evaluation function allows to minimize an existing offset and, thereby, ensures that the marker position approaches the border of the display screen before the pointing position in the pointing space exits the tracking area. In a preferred embodiment, the gain parameter increases monotonically with decreasing distance of the current pointing position in the peripheral region from a peripheral edge of the display space.

In one example, the method may be combined with a recursive filter to adapt to marker movement to the human pointing behaviour dynamically and to predict the next position based on previously measured deviations, movement speed and/or acceleration. This prediction may be continuously compared to the measured data resulting in an iterative update of the movement model which minimizes the mean squared error. Preferably, such recursive filter may be realized with a well-known Kalman filter (J. Oh et al. "Laser pointers as collaborative pointing devices", in Proc. GI '02, 2002; M. C. Chen et al. "What can a mouse curser tell us more?: correlation of eye/mouse movements on web browsing" in Proc. CHI '01, pages 281-282, 2001; P. Frolov et al. "Using kalman filter for natural hand tremor smoothing during the interaction with the projection screen", in Workshop Proceedings VEonPC '2002, pages 94-101, 2002; W. A. König et al. "Position-independent interaction for large high-resolution displays" in Proc. IHCI '07, 2007). Preferably, a static Kalman filter is applied in connection with the present invention, since the invention provides the dynamic component. Using a continuously updated state estimate (=position) instead of the actual measured position leads to a smoothed pointer behaviour which is less sensitive for hand jittering as well as technological noise e.g. caused by optical tracking.

In another aspect, the present invention provides a pointing system which comprises:

- a pointer element adapted to receive a user input that defines a plurality of successive pointing positions;
- a control component adapted to perform the steps of a method according to the present invention or a preferred embodiment thereof; and
- a display component adapted to output the established current marker position on the display screen.

In a preferred embodiment the display component comprises a display driver and a display interface that is adapted be connected to a display device, such as a monitor or a video projector. In another preferred embodiment the display component comprises a display device, such as a monitor or a video projector.

Preferably, the pointer element comprises an optical detection component for detecting an invisible light spot of a laser pointer on the display screen. Alternatively or additionally the pointer element may comprise one or more non-optical detection components for detecting a pointing position. In particular, the pointer element may comprise one or more detection components for ultrasonic signals and/or one or more capacitive or resistive electrical detection components.

In yet another aspect, the present invention provides a computer program product comprising program code, which when loaded in a computer system causes the system to perform the steps of a method according to the present invention or a preferred embodiment thereof.

Further details and advantages will be apparent from the following description of preferred embodiments:

These and other objects, features and advantages of the present invention will become more apparent upon reading of the following detailed description of preferred embodiments and accompanying drawings. It should be understood that even though embodiments are separately described, single features thereof may be combined to additional embodiments.

Fig. 1               shows a user of a pointing system according to a preferred embodiment of the present invention, where a user stands in front of a display screen of the pointing system;

Fig. 2               shows a schematic view of a display screen in a pointing system according to the present invention;

Fig. 3               shows a flow diagram that schematically illustrates a method according to a preferred embodiment of the present invention;

Figs. 4A to 4C       show gain evaluation functions according to preferred embodiments of the present invention;

Figs. 5A and 5B      show test results to demonstrate an improved performance of the present invention according to a preferred embodiment over conventional absolute pointing behavior; and

Fig. 6               shows an exemplary system for implementing the present invention or a preferred embodiment thereof.

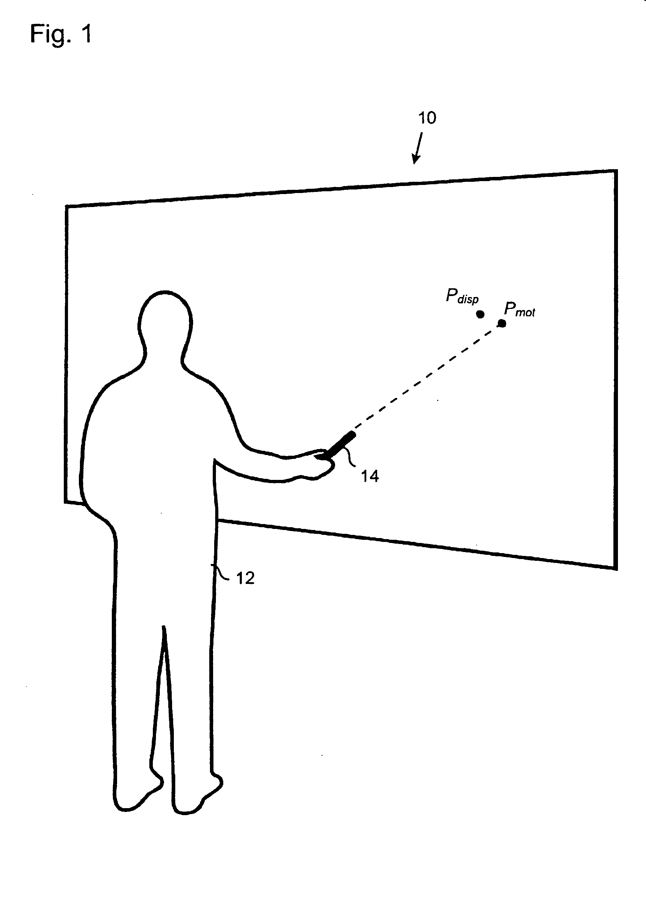

Fig. 1 shows a schematic view of a display screen 10 of a pointing system according to a preferred embodiment of the present invention. In this example a pointer element of the pointing system comprises a pointer tool 14, such as a laser pointer. This pointer tool 14 may be directly handled by the user 12. Preferably, the pointer tool 14 emits optical signals, such as a light beam. In particular, the light beam may be a continuous or a pulsed light beam emitted in a constant or fixed direction relative to the pointer tool 14. Thus, by moving the pointer tool 14 the user 12 can control a light spot projected to a direct pointing position on the display screen 10. In a preferred embodiment, the light emitted from the pointer tool 14 is in an invisible wavelength range, such as the infrared range, for example. Preferably, the pointer element comprises an optical detection component, such as an infrared camera positioned in front of or behind the display screen 10, for example. In another example, the optical detection component may comprise a light sensitive functionality of the display screen itself. In general, the optical detection component may be adapted to detect the direct pointing position of the projected light spot, such as an infrared light spot, on the display screen. Preferably, the direct pointing position, i.e. the projected light spot, is not directly visible to the user. The projection area which the user 12 applies for projecting the light spot such that it is detected by the optical detection component forms a pointing space. In the preferred embodiment according to Fig. 1 the pointing space substantially coincides with the area of the display screen. In particular, the pointing space forms a two-dimensional planar area in this case. In other examples, a curved display screen may be applied and the pointing space may form a respectively curved two-dimensional area.

In the shown preferred embodiment, the pointer element receives an input from the user that defines a plurality of successive direct pointing positions. This may be achieved by continuously detecting the position of the projected light spot, i.e. the direct pointing position, and/or by detecting the direct pointing position at a plurality of subsequent predetermined and/or internally or externally triggered sample times with equal (i.e. constant) or varying time intervals. The determined pointing positions may be directly or indirectly transmitted from the pointer element (e.g., from the optical detection component) to a control component of the pointing system. Based on that input received at the control component from the pointer element, the control component achieves a plurality of subsequent pointing positions $P_{mot}$ in a display space that substantially corresponds to the area of the display screen. Preferably, the control component maps the pointing space, or at least part thereof, to the display space, or to at least part thereof. Preferably, the control component applies a 1:1-correspondence between positions in the pointing space and corresponding positions in the display space. Due to this reproducible position-to-position mapping the pointer element represents an absolute input device with respect to the pointing positions $P_{mot}$ in the display space.

In the example of Fig. 1, in addition to the mapping relation between the pointing space and the display space, the pointing space also spatially coincides with the display space. Preferably, each direct pointing position on the display screen is mapped to a pointing position $P_{mot}$ in the display space that corresponds to the same position on the display screen as the projected light spot. In other examples, the pointing space may be spatially separated from the display screen. Preferably, the pointing position $P_{mot}$ is not visually output to the user 12 on the display screen. Thus, Fig. 1 is only a schematic illustration of the preferred pointing system in this respect, where the location of the pointing position is indicated for illustration purpose only.

Depending on subsequent pointing positions $P_{mot}$, the pointing system establishes a current marker position $P_{disp}$ as will be explained in more detail below. In particular, the marker position defines a position of a pointing marker to be visually output on the display screen. The pointing marker may comprise any kind of visual marker, such as a dot and/or an arrow and/or a cross and/or any other kind of cursor symbol, for example.

The present invention insures that the established marker position $P_{disp}$ stays close to the pointing position $P_{mot}$, thereby maintaining the impression of an absolute pointing behaviour for the user 12. Nevertheless, the invention still allows a (small) deviation between the pure absolute pointing behaviour of the pointing position $P_{mot}$ and the dynamically controlled movement of the marker position $P_{disp}$, thereby improving the pointing accuracy.

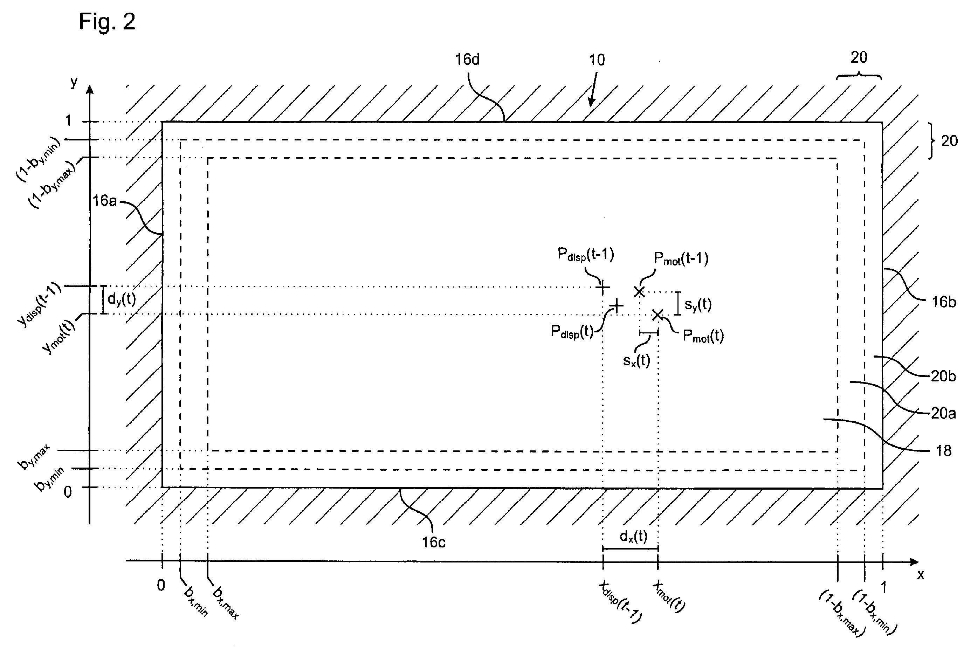

Fig. 2 shows a schematic view of a display screen 10 according to a preferred embodiment of the present invention. In this example, the display screen extends horizontally in x-direction and vertically in y-direction. Each position on the display screen is identified by a pair of coordinates $(x, y)$. These coordinates may be parameterized to define values from 0 to 1. In particular, $x=0$ defines a first edge 16a (e.g. a left edge) of the display screen 10, $x=1$ defines a second edge 16b (e.g. a right edge) of the display screen 10. Moreover, $y=0$ defines a third edge 16c (e.g. a bottom edge) of the display screen 10 and $y=1$ defines a fourth edge 16d (e.g. a top edge) of the display screen 10. According to the embodiment of Fig. 1, the display screen 10 comprises a main operation region 18 which extents in the range of $b_{x,max} < x < (1-b_{x,max})$ and $b_{y,max} < y < (1-b_{y,max})$. The main operation region forms the main and central part of the display screen 10. In this example the main operation region 18 is surrounded by a peripheral region 20 of the display screen 10, which covers the ranges $x \leq b_{x,max}$, $x \geq (1-b_{x,max})$, $y \leq b_{y,max}$, and $y \geq (1-b_{y,max})$. In the example of Fig. 2, the peripheral region 20 comprises an intermediate region 20a and an edge region 20b. The edge region 20b covers the ranges $x \leq b_{x,min}$, $x \geq (1-b_{x,min})$, $y \leq b_{y,min}$, and $y \geq (1-b_{y,min})$, while the intermediate region 20a preferably covers the rest of the peripheral region 20.

Based on an input from the pointer element the control component achieves a plurality of pointing positions in the display space. In particular, pointing positions $P_{mot}$ are achieved for a plurality of sample times. In the following, each sample event is identified by an index $t, (t-1), (t-i)$, etc., where the index t represents a current sample event, $(t-1)$ represents the latest previous sample event before the current sample event, etc.. Thus, $P_{mot}(t)$ identifies a current pointing position, with the current coordinates $(x_{mot}(t), y_{mot}(t))$. When the user moves the pointer tool, e.g. a laser pointer, between two subsequent sample times, e.g. a previous sample time $time(t-1)$ and a current sample time $time(t)$, the current pointing position $P_{mot}(t)$ is displaced from the previous pointing position $P_{mot}(t-1)$ by a pointing displacement $s(t)$. In the example of Fig. 2 the pointing displacement $s(t)$ is identified by the coordinates $s_x(t)=x_{mot}(t)-x_{mot}(t-1)$ and $s_y(t)=y_{mot}(t)-y_{mot}(t-1)$. The movement of the pointing position $P_{mot}$ in the display space corresponds to an absolute pointing behaviour. Preferably, the pointing position $P_{mot}$ is not visually output on the display screen 10.

As further visualized in Fig. 2, the control component determines a pointing deviation $d(t)$ of the current pointing position $P_{mot}(t)$ from a previous marker position $P_{disp}(t-1)$. Preferably, the previous marker position $P_{disp}(t-1)$ is identified via its coordinates $(x_{disp}(t-1), y_{disp}(t-1))$ and the pointing deviation may be identified by the coordinates $d_x(t)=x_{mot}(t)-x_{disp}(t-1)$ and $d_y(t)=y_{mot}(t)-y_{disp}(t-1)$. In another example, the pointing deviation may be determined as a deviation of the previous pointing position $P_{mot}(t-1)$ from the previous marker position $P_{disp}(t-1)$, for example. In yet another example, a mean value of previous pointing positions and/or marker positions may be considered for the determination of the pointing deviation $d(t)$. Based on these positions and/or coordinates, the control component dynamically establishes a current marker position as will be apparent from the following description of the preferred embodiment.

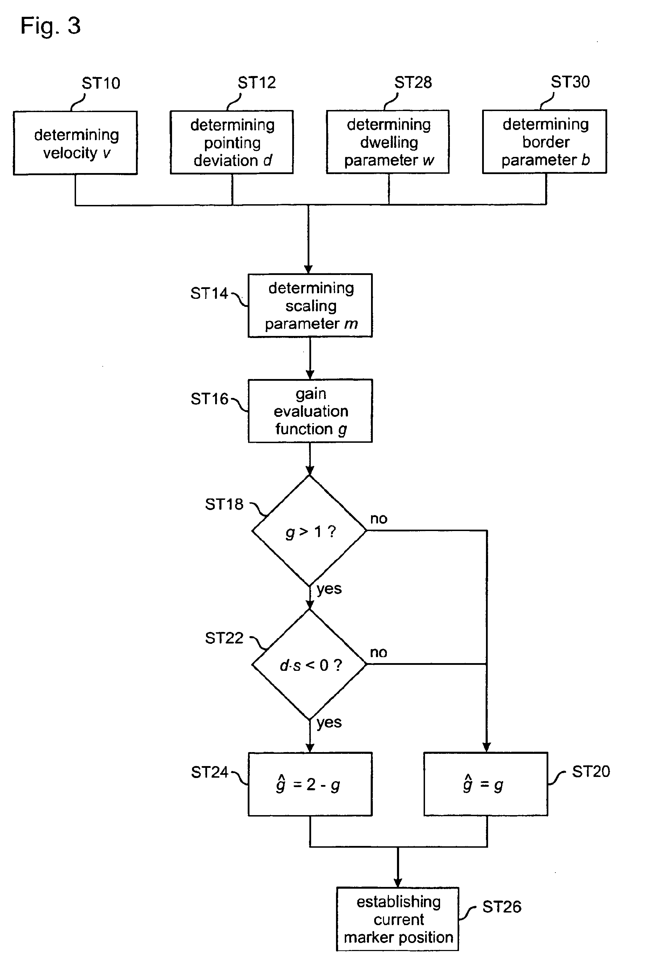

A method for controlling a pointing marker according to preferred embodiments of the present invention will be described with reference to the flow diagram of Fig. 3 in following. According to these examples, the horizontal and vertical coordinates of the movement are treated independently. The following description refers to one coordinate only. As will be appreciated by the reader, this description may be applied to the other coordinate in an analogous manner. According to the depicted example, the method comprises a step ST10 of determining a velocity $v(t)$ of the pointing position. The horizontal coordinate of the velocity may be determined as an average of the velocity over a predetermined time span (e.g. 50 ms), which could be used to minimize measurement noise.

$$v_x(t) = \frac{1}{n} \sum_{i=1}^{n} \left| \frac{x_{mot}(t-i+1) - x_{mot}(t-i)}{time(t-i+1) - time(t-i)} \right| \qquad (1)$$

In another example the velocity may be determined as a current velocity with $n=1$ in equation (1). Based on this velocity, the described preferred embodiment comprises determining a standardized velocity parameter $\hat{v}(t)$ that increases continuously and monotonically as a function of the determined velocity $v(t)$. For example, in step ST10 the standardized velocity parameter may be determined by:

$$\hat{v}_x(t) = \begin{cases} 1 & if \quad v_x(t) > v_{\max} \\ 0 & if \quad v_x(t) < v_{\min} \\ \dfrac{v_x(t) - v_{\min}}{v_{\max} - v_{\min}} & otherwise \end{cases} \qquad (2)$$

Exemplary values for the parameters are: $v_{\min}$ is approximately $0.0009 \dfrac{\% \ of \ the \ display \ width}{ms}$ or approximately 0.003 m/s, for example, $v_{\max}$ is approximately $0.01 \dfrac{\% \ of \ the \ display \ width}{ms}$ or approximately 0.03 m/s, for example.

The method of Fig. 3 further comprises a step ST12 of determining the deviation $d_x(t) = x_{mot}(t) - x_{disp}(t-1)$. Based on this deviation, the described preferred embodiment comprises determining a standardized deviation parameter $\hat{d}(t)$ that increases continuously and monotonically as a function of the determined deviation $d(t)$. For example, in step ST12 the standardized deviation parameter may be determined by:

$$\hat{d}_x(t) = \begin{cases} 1 & if \quad |d_x(t)| > d_{\max} \\ 0 & if \quad |d_x(t)| < d_{\min} \\ \dfrac{|d_x(t)| - d_{\min}}{d_{\max} - d_{\min}} & otherwise \end{cases} \qquad (3)$$

Exemplary values for the parameters are: $d_{\min}$ is approximately 1% of the display width or approximately 47 pixels, for example, $d_{\max}$ is approximately 5% of the display width or approximately 232 pixels, for example.

According to the preferred embodiment of Fig. 3, the method further comprises a step ST14 of determining a scaling parameter $m$ which is a function of the determined velocity and the determined deviation, i.e. the scaling parameter depends on the determined velocity and the determined deviation. Preferably, the scaling parameter is a continuous function of the determined velocity and/or the standardized velocity parameter and/or the determined deviation and/or the standardized deviation parameter. Preferably, the scaling parameter monotonically increases with an increasing velocity and/or an increasing standardized velocity parameter and/or an increasing deviation and/or an increasing standardized deviation parameter. In one preferred embodiment the scaling parameter is determined by

$$m_x(t) = \max\left(\hat{v}_x(t), \hat{d}_x(t)\right) \qquad (4)$$

in step ST14.

Moreover, the method may further comprise a step ST16 of establishing a gain evaluation function $g(t)$. Preferably, the gain evaluation function is a continuous function of the scaling parameter and/or the determined velocity and/or the standardized velocity parameter and/or the determined deviation and/or the standardized deviation parameter. Preferably, the gain evaluation function monotonically increases with an increasing scaling parameter and/or an increasing velocity and/or an increasing standardized velocity parameter and/or an increasing deviation and/or an increasing standardized deviation parameter. Preferably, the gain evaluation function is a differentiable function of the scaling parameter. In one preferred embodiment the gain evaluation function is established as

$$g_x(t) = g_{\min} + \frac{1}{2}\left[1 - \cos(m_x(t) \cdot \pi)\right](g_{\max} - g_{\min}) \tag{5}$$

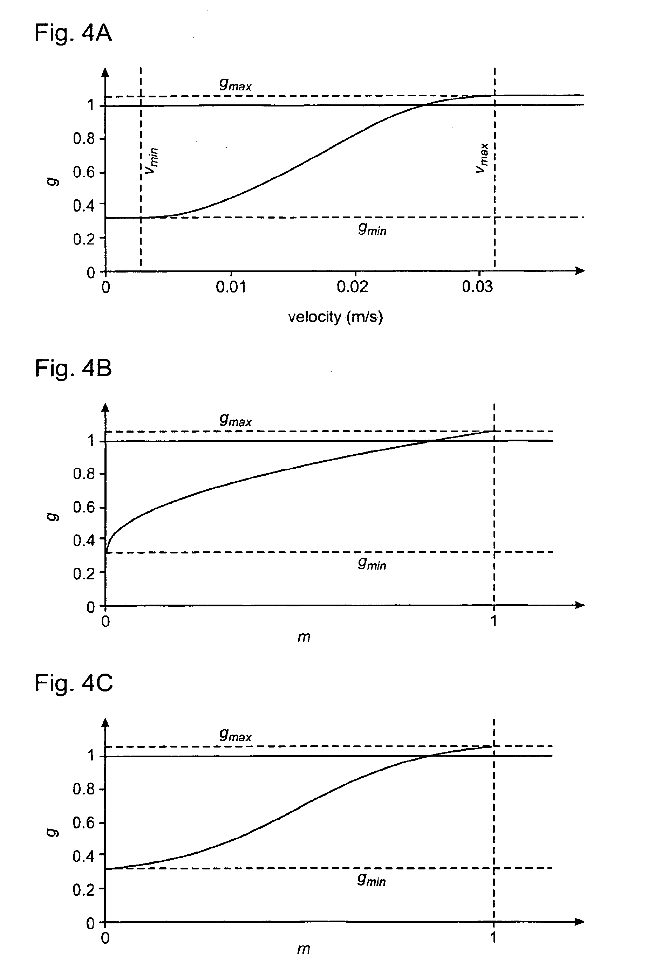

in step ST16. Exemplary values for the parameters are: $g_{\min}$ is approximately 0.3, for example, $g_{\max}$ is approximately 1.06, for example. Preferably, $g_{\min}$ is in the range of about 0.05 to 0.5, more preferably in the range of about 0.1 to 0.5, most preferably in the range of about 0.2 to 0.4. Preferably, $g_{\max}$ is greater than 1, more preferably in the range of about 1.01 to 1.4, even more preferably in the range of about 1.01 to 1.2, most preferably in the range of about 1.01 to 1.1. Fig. 4A shows an exemplary plot of the gain evaluation function $g(t)$ in accordance with equations (2) to (5) as a function of the velocity $v(t)$, with a pointing deviation $d(t) \le d_{\min}$.

Other preferred examples of gain evaluation functions $g(t)$ are shown in Figs.4B and 4C as functions of the scaling parameter $m$. In particular, according to the preferred embodiment of Fig. 4B the gain evaluation function may be established as

$$g_x(t) = g_{\min} + \sqrt{m_x(t)}(g_{\max} - g_{\min}) \tag{6}$$

in step ST16 of Fig. 3. Moreover, according to the preferred embodiment of Fig. 4C the gain evaluation function may be established as

$$g_x(t) = g_{\min} + \frac{1 - e^{-2km}}{\left(e^k - 1\right)\left(e^{-k} + e^{-2km}\right)}(g_{\max} - g_{\min}) \tag{7}$$

in step ST16 of Fig. 3. According to yet another preferred embodiment not explicitly shown in the figures, the gain evaluation function may be established as

$$g_x(t) = g_{\min} + m_x(t)(g_{\max} - g_{\min}) \tag{8}$$

in step ST16 of Fig. 3.

As shown in Fig. 3, the method preferably further comprises a step ST18 of determining whether the gain evaluation function is greater than 1. If in step ST18 the gain evaluation function is determined not to be greater than one, then the method may path to a step ST20 of setting the current value of a gain parameter $\hat{g}(t)$ to the current value of the gain evaluation parameter $g(t)$. If in step ST18 the gain evaluation function is determined to be greater than 1, then the method may path to a step of ST22 of determining whether the determined pointing displacement $s(t)$ has a sign opposite to the sign of the determined pointing deviation $d(t)$. If in step ST22 the sign of the pointing displacement is determined not to be opposite to the sign of the pointing deviation, then the method may path to step ST20 of setting the current value of the gain parameter $\hat{g}(t)$ to the current value of the gain evaluation parameter $g(t)$. If in step ST22 the sign of the pointing displacement is determined to be opposite to the sign of the pointing deviation, then the method may path to a step ST24 of setting the current value of a gain parameter $\hat{g}(t)$ to a value smaller than 1. Preferably, in step ST24 the value of a gain parameter $\hat{g}(t)$ is set to the value $(2-g(t))$. In one example, steps ST18 to ST24 may be described by the equation:

$$\hat{g}_x(t) = \begin{cases} 2 - g_x(t) & \text{if } g_x(t) > 1 \quad AND \quad d_x(t) \cdot s_x(t) < 0 \\ g_x(t) & \text{otherwise} \end{cases} \tag{9}$$

Preferably, the method further comprises as step ST26 of establishing a current or new marker position $P_{disp}(t)$. In particular, the current marker position may be established such that it is displaced relative to the previous marker position by a marker displacement, wherein the ratio of the marker displacement over the pointing displacement is defined by the gain parameter. Preferably, step ST26 may be described by the equation

$$x_{disp}(t) = x_{disp}(t-1) + \hat{g}_x(t) \cdot s_x(t) \qquad (10)$$

for the horizontal coordinates $x_{disp}(t)$ and $x_{disp}(t-1)$ of the current and the previous marker position, respectively.

In addition the above described preferred embodiment, Fig. 3 shows a further preferred step ST28 of determining a dwelling parameter $w(t)$. In the example of equation (4) a large pointing deviation can overrule the influence of the velocity on the gain parameter. Preferably, the dwelling parameter is adapted to restrict such overruling. Accordingly, even if the pointing deviation is high, the dwelling parameter may allow a precise pointer control, i.e. a low gain parameter, when needed. Preferably, the dwelling parameter may be determined such as to identify the mean deviation of the current pointing position from a plurality of previous pointing positions. In one preferred embodiment the dwelling parameter may be determined according to the equation

$$w_x(t) = \frac{1}{k} \sum_{i=1}^{k} |x_{mot}(t) - x_{mot}(t-i)| \qquad (11)$$

where the mean value is determined over the last $k$ pointing positions, such as $k = 5$, for example. In one example, the mean value is determined over about 66 ms. However, the method is not limited to this evaluation of the dwelling parameter. Alternatively, other methods may be applied that involve different weighting of previous pointing positions, for example. In a preferred embodiment, step ST28 may further comprise determining a standardized dwelling parameter $\hat{w}(t)$ that increases continuously and monotonically as a function of the determined dwelling parameter $w(t)$. For example, in step ST28 the standardized dwelling parameter may be determined by

$$\hat{w}_x(t) = \begin{cases} 1 & if & w_x(t) > w_{max} \\ 0 & if & w_x(t) < w_{min} \\ \dfrac{w_x(t) - w_{min}}{w_{max} - w_{min}} & otherwise \end{cases} \qquad (12)$$

Exemplary values for the parameters are: $w_{min}$ is approximately 0.01% of the display width, for example, $w_{max}$ is approximately 0.1% of the display width or approximately 5 pixels, for example.

In cases where the dwelling parameter is determined in addition to the velocity and the pointing deviation, in step ST14 the scaling parameter may be determined as a continuous function of the dwelling parameter. Preferably, the scaling parameter monotonically increases with increasing dwelling parameter and/or standardized dwelling parameter. Preferably, the scaling parameter may be determined according to the equation

$$m_x(t) = \hat{w}_x(t) \max(\hat{v}_x(t), \hat{d}_x(t)) \qquad (13)$$

in step ST14. Accordingly, if the control component determines a low dwelling parameter, which corresponds to marginal or no movement of the pointer tool, then a low value of the gain parameter is established, which causes a high precision of the marker control, even if a pointing deviation has been determined which would overrule the standardized velocity parameter in equation (13).

According to a further preferred embodiment, the method may comprise a step ST30 of determining a border parameter $b(t)$ which identifies the distance of the current pointing position from the edge of the display space. With the parameterization described in connection with Fig. 2, the border parameter may be determined according to equation

$$b_x(t) = \min\left(x_{mot}(t), 1 - x_{mot}(t)\right) \qquad (14)$$

In a preferred embodiment, step ST30 may further comprise determining a standardized border parameter $\dot{b}(t)$ that increases continuously and monotonically as a function of the determined border parameter $b(t)$. For example, in step ST30 the standardized border parameter may be determined by

$$\dot{b}_x(t) = \begin{cases} 1 & if \quad b_x(t) > b_{max} \\ 0 & if \quad b_x(t) < b_{min} \\ \dfrac{b_x(t) - b_{min}}{b_{max} - b_{min}} & otherwise \end{cases} \qquad (15)$$

Exemplary values for the parameters are: $b_{min}$ is approximately 1% of the display width or approximately 50 pixels, for example, $b_{max}$ is approximately 10% of the display width or approximately 500 pixels, for example.

Preferably, the method further comprises a step of determining whether the standardized border parameter is smaller than the standardized deviation parameter. If the standardized border parameter is determined to be not smaller than the standardized deviation parameter, then the value of a border control parameter $\hat{b}(t)$ may be set to the standardized deviation parameter. If the standardized border parameter is determined to be smaller than the standardized deviation parameter, then the value of a border control parameter $\hat{b}(t)$ may be set to the value $(1-\dot{b}(t))$. For the horizontal coordinate this is expressed via

$$\hat{b}_x(t) = \begin{cases} \hat{d}_x(t) & if \quad \dot{b}_x(t) \geq \hat{d}_x(t) \\ 1 - \dot{b}_x(t) & if \quad \dot{b}_x(t) < \hat{d}_x(t) \end{cases} \qquad (16)$$

In cases where the border parameter is determined in addition to the velocity and the pointing deviation, in step ST14 the scaling parameter may be determined as a continuous function of the border parameter and/or the standardized border control parameter and/or the border control parameter. Preferably, the scaling parameter monotonically increases with increasing border parameter and/or standardized border parameter and/or border control parameter. Preferably, the scaling parameter may be determined according to the equation

$$m_x(t) = \hat{w}_x(t) \max\left(\hat{v}_x(t), \hat{d}_x(t), \hat{b}_x(t)\right) \qquad (17)$$

in step ST14. Accordingly, when using an input device with tracking area which ends at the borders of the display, considering the border parameter ensures that the user is able to point to information directly on the display border.

In summary, the present invention improves pointing performance for absolute input devices by implicitly adapting the CD gain to the current user's need without violating users' mental model of absolute device operation. Users expect a 1:1 mapping between their device movement in motor space and the resulting pointer movement in display space when using an absolute pointing device. The present invention largely preserves the impression of a substantially absolute behaviour but also dynamically and continuously changes the CD gain. Thereby the invention achieves an improved pointing precision. In particular, the invention automatically adapts the pointing accuracy. The present invention does not need any knowledge of the displayed information or active elements. However, it can be easily combined with visual interaction techniques such as expanding targets or Drag-and-Pop, as well as hand tremor compensations (e.g.

Kalman filter) if further pointing and selection improvement is desired.

In particular, the invention provides an impression of absolute pointing behaviour while offering high pointing precision by smoothly decreasing the CD gain when the current velocity falls below a predefined threshold, for example. Abrupt switching during the change of gain is effectively avoided. When the user decreases speed to aim at a target, the CD gain is smoothly (continuously) adapted until the minimum gain is reached for low velocities or until the user increases the movement speed again. However, the pointing marker moves slower in display space than the absolute pointing position of the pointer element (pointer tool) when the CD gain is lowered. This may result in a divergence between absolute pointing position and the established marker position. Therefore, when the user increases speed (velocity) again the divergence is reduced along the way by smoothly increasing the CD gain even above 1 to continuously minimize the divergence. For slow movements the CD gain preferably converges to small values greater than 0. This results in a high pointing precision. For the case that the user keeps a long way in the slow movement, the CD gain increases dynamically in correlation to the amount of divergence due to the dependence of the gain parameter from the pointing deviation. Therefore it preserves a pointing behaviour similar to a pure absolute pointing.

To demonstrate further advantageous controlled experiments were carried out with 24 participants. As an example of an absolute pointing device a laser pointer Interaction technology was used in connection with a 221" Powerwall (8.9 megapixel-display screen: 4640x1920 pixels and a physical dimension of 5.20x2.15 meters) to explore the potential of the novel interaction technique. This is obviously a very demanding setting for absolute pointing techniques, since the user has to point at, select and manipulate very small objects from several meters distance (e.g. the Windows start button is only 22mm in height on such a display). A method according to a preferred embodiment of the present invention was compared to a pure absolute pointing in terms of efficiency, effectiveness and user satisfaction.

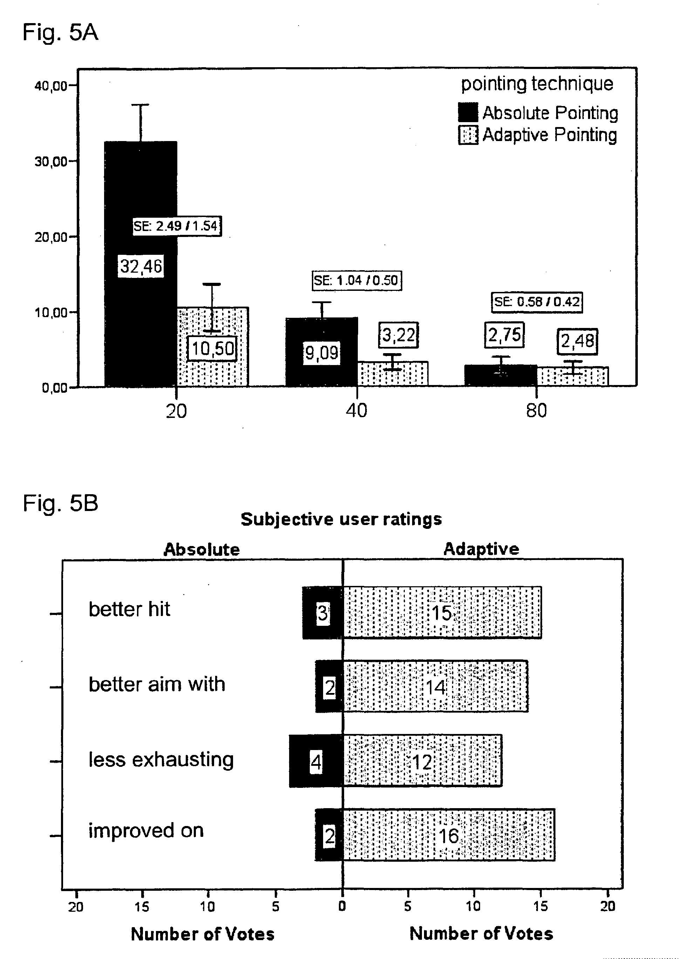

The participants had to perform different tasks. In a "bubble" task, users had to move the cursor, i.e. the pointing marker, (in form of a cross-hair) onto a randomly appearing bubble target and click the button while being over it. The task is largely along the lines of Fitts' Law experiments, as e.g. recommended by the ISO-9241-9. Fig. 5A demonstrate a comparison of error rates between conventional absolute pointing (left column) and adaptive pointing according to the present invention (right column) for different target sizes. The targets appeared randomly in different width and amplitude combinations. Target-widths of 20, 40 and 80 pixels (22.4, 44.8 and 89.6 mm respectively) were presented. From Fig. 5A the improved performance with significantly lower error rates in a method according to the present invention becomes apparent.

In another task the steadiness of the pointing technique according to the present invention was assessed, meaning how stable one can hold onto a certain position. In this "dwelling" test users had to point at a 20 pixel target located in the center of the screen for five seconds. While users could point to a target with a mean deviation of 4.72 pixels when using the technique according to a present invention, they only managed a mean deviation of 7.99 pixels with a conventional absolute pointing.

Fig. 5B shows a subjective user rating of the pointing performance according to the present invention as compared to a conventional absolute pointing system. The clear improvement also from a subjective point of view becomes apparent. In particular, users stated that they clearly preferred the technique of the present invention and assigned positive characteristics like "better hitting" or "less exhausting" to it.

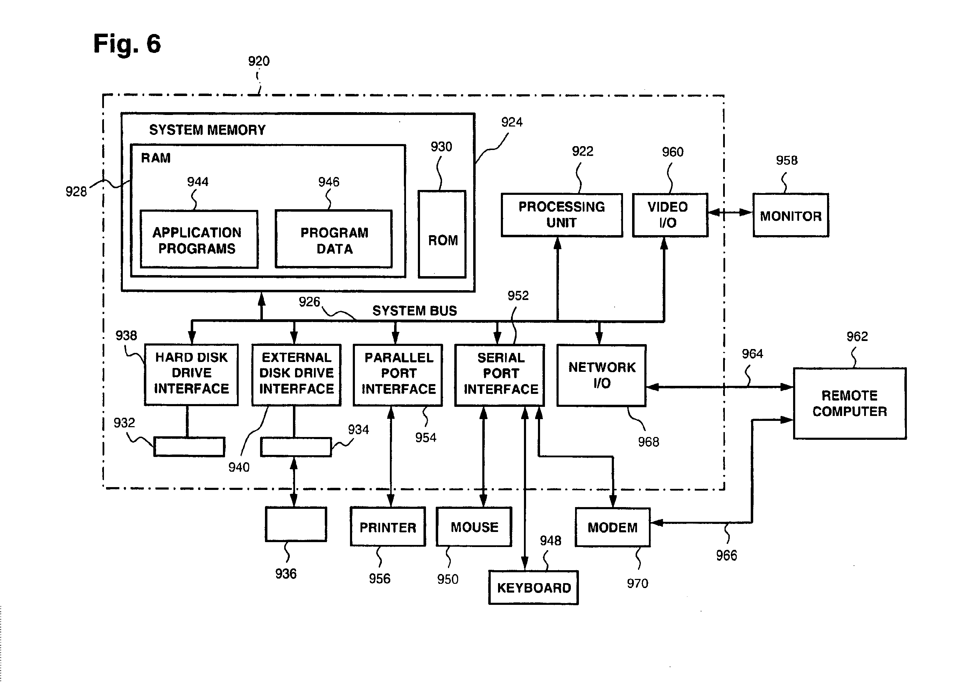

Fig. 6 shows an exemplary system for implementing the invention including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and non-volatile memory, such as a random access memory (RAM) 928 and a read only memory (ROM) 930.

A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for controlling a pointing marker on a display screen, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 5.

A user may enter commands and information, as discussed below, into the personal computer 920 through input devices such as keyboard 948 and mouse 950. Other input devices (not shown) may include a microphone (or other sensors), joystick, game pad, scanner, or the like. In particular, the input devices may comprise one or more pointer elements as described above or components thereof. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Fig. 6** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Fig. 6** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the Short Message Alert (SMA) (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for controlling a pointing marker on a display screen.

**List of Reference Numerals**

| | |
|---|---|
| 10 | display screen |
| 12 | user |
| 14 | laser pointer |
| 16a-16d | edges of the display screen |
| 18 | main operation region |
| 20 | peripheral region |
| 20a | intermediate region |
| 20b | edge region |
| 920 | conventional computing environment |
| 922 | processing unit |
| 924 | system memory |
| 926 | system bus |
| 928 | random access memory (RAM) |
| 930 | read only memory (ROM) |
| 932 | hard disk drive |
| 934 | external disk drive |
| 936 | removable disk |

| 938 | hard disk drive interface |
| 940 | external disk drive interface |
| 944 | one or more application programs |
| 946 | program data |
| 948 | keyboard |
| 950 | mouse |
| 952 | serial port interface |
| 954 | parallel port interface |
| 956 | printer |
| 958 | monitor |
| 960 | video input/output |
| 962 | remote computer |
| 964 | local area network (LAN) |
| 966 | wide area network (WAN) |
| 968 | network I/O |
| 970 | a modem |

**Claims**

1. Computer-implemented method for controlling a position ($P_{disd}(t)$ of a pointing marker that is visually output on a display screen (10), the method comprising

   - receiving an input from a pointer device to obtain one or more previous absolute pointing positions and a current absolute pointing position ($P_{mot}(t)$) of said pointer device within a main operation region (18) of a display space of the display screen (10);
   - determining a pointing displacement ($s$) of the current absolute pointing position as compared to one or more of the previous absolute pointing positions ($P_{mot}(t\text{-}1)$);
   - determining a velocity ($v$) of the pointer device and/or the absolute pointing position;
   - determining a pointing deviation ($d$) of the current absolute pointing position and/or the one or more previous absolute pointing positions, from a previous position ($P_{disp}(t\text{-}1)$) of the pointing marker in the display space;
   - establishing a current position ($P_{disp}(t)$) of the pointing marker in the display space by displacing the position of the pointing marker relative to the previous position of the pointing marker by a marker displacement ($\hat{g} \cdot s$), wherein the ratio of the marker displacement over the pointing displacement ($s$) is determined by a gain parameter ($\hat{g}$) which is a continuous function of the determined velocity ($v$) and the determined pointing deviation ($d$) at least for non-zero values of the velocity ($v$) and the pointing deviation ($d$), such that pointing precision is improved.

2. Method of claim 1, wherein the minimal value ($g_{min}$) of the gain parameter ($\hat{g}$) is in the range of about 0.05 to 0.5.

3. Method of any one of the preceding claims, wherein the maximal value ($g_{max}$) of the gain parameter ($\hat{g}$) is greater than 1.

4. Method of any one of the preceding claims, further comprising determining a dwelling parameter ($w$) that identifies the mean deviation of the current absolute pointing position from a plurality of previous absolute pointing positions, wherein the current position of the pointing marker is established with the gain parameter ($\hat{g}$) being a continuous function of the dwelling parameter ($w$).

5. Method of claim 4, wherein the gain parameter ($\hat{g}$) does not change with the determined velocity ($v$) and the determined pointing deviation ($d$) if the dwelling parameter ($w$) is below a lower dwelling reference value ($w_{min}$).

6. Method of claim 5, wherein, if the dwelling parameter ($w$) is greater than the lower dwelling reference value ($w_{min}$) and the absolute value of the determined velocity ($v$) is lower than an upper velocity reference value ($v_{max}$), the gain parameter ($\hat{g}$) depends on the pointing deviation ($d$).

7. Method of any one of the preceding claims, wherein the current position of the pointing marker is established with the gain parameter ($\hat{g}$) being independent from the determined velocity ($v$) if the absolute value of the pointing deviation ($d$) is greater than an upper deviation reference value ($d_{max}$).

8. Method of claim 4, wherein the gain parameter ($\hat{g}$) is a monotonically increasing function of at least one of the of the determined velocity ($v$), the pointing deviation ($d$), and the dwelling parameter ($w$).

9. Method of any one of the preceding claims, wherein
determining a pointing displacement ($s$) comprises determining a horizontal displacement ($s_x$) and/or a vertical displacement ($s_y$) of the current absolute pointing position as compared to one or more of the previous absolute pointing positions,
determining a velocity ($v$) comprises determining a horizontal component of the velocity ($v_x$) and/or a vertical component of the velocity ($v_y$),
determining a pointing deviation ($d$) comprises determining a horizontal deviation ($d_x$) and/or a vertical deviation ($d_y$) of the current absolute pointing position and/or one or more previous absolute pointing positions from a previous position of the pointing marker in the display space, and
wherein the current position of the pointing marker is established by displacing the position of the pointing marker horizontally and/or vertically relative to the previous position of the pointing marker by a horizontal marker displacement ($\hat{g}_x \cdot s_x$) and/or a vertical marker displacement ($\hat{g}_y \cdot s_y$), wherein the ratio of the horizontal marker displacement over the horizontal pointing displacement ($s_x$) is determined by a horizontal gain parameter ($\hat{g}_x$) which is a continuous function of the determined horizontal component of the velocity $v_x$ and the determined horizontal deviation ($d_x$) at least for non-zero values of the horizontal component of the velocity and the horizontal deviation, and the ratio of the vertical marker displacement over the vertical pointing displacement ($s_y$) is determined by a vertical gain parameter ($\hat{g}_y$) which is a continuous function of the determined vertical component of the velocity ($v_y$) and the determined vertical deviation ($d_y$) at least for non-zero values of the vertical component of the velocity and the vertical deviation.

10. Method of any one of the preceding claims, wherein establishing a current position of the pointing marker comprises

- providing a gain evaluation function ($g$), which is a monotonic differentiable function of the determined velocity and/or the determined pointing deviation and/or the dwelling parameter;
- if the gain evaluation function is greater than one and the determined pointing displacement has a sign opposite to the sign of the determined pointing deviation, the gain parameter ($\hat{g}$) is established as $2-g$ based on the gain evaluation function $g$ ; and
- if the gain evaluation function ($g$) is not greater than 1 or if the determined pointing displacement has a sign that is not opposite to the sign of the determined pointing deviation, the gain parameter ($\hat{g}$) is established as the gain evaluation function ($g$).

11. Method of claim 10 in combination with claim 4, further comprising

- determining a standardized velocity parameter ($\hat{v}$) that increases continuously and monotonically from $\hat{v}_{min} = 0$ to $\hat{v}_{max} = 1$ as a function of the determined velocity ($v$);
- determining a standardized deviation parameter ($\hat{d}$) that increases continuously and monotonically from $\hat{d}_{min} = 0$ to $\hat{d}_{max} = 1$ as a function of the determined deviation ($d$); and
- determining a standardized dwelling parameter ($\hat{w}$) that increases continuously and monotonically from $\hat{w}_{min} = 0$ to $\hat{w}_{max} = 1$ as a function of the dwelling parameter ($w$);

wherein the gain evaluation function is $g = g_{min} + \dfrac{1}{2}\left[1 - \cos\left(m \cdot \pi\right)\right]\left(g_{max} - g_{min}\right)$ with a scaling parameter

$m = \hat{w} \cdot \max(\hat{v}, \hat{d})$.

12. Method of claim 10 or 11, further comprising receiving an input from a pointer device to achieve a current absolute pointing position of the pointer device within a peripheral region of the display space, wherein the gain evaluation function increases monotonically with decreasing distance of the current absolute pointing position in the peripheral region from a peripheral edge of the display space:

13. Pointing system comprising:

- a pointer device adapted to receive a user input that defines a plurality of successive absolute pointing positions;
- a control component adapted to perform the steps according to a method of one of the claims 1 to 12; and

- a display component adapted to output the established current position of the pointing marker on the display screen.

14. Pointing device of claim 13, wherein the pointer device comprises an optical detection component for detecting an invisible light spot of a laser pointer on the display screen.

15. Computer program product comprising program code, which when loaded in a computer system causes the system to perform the steps according to a method of one of the claims 1 to 12.


**Patentansprüche**

1. Computerimplementiertes Verfahren zum Steuern bzw. Regeln einer Position ($P_{disp}(t)$) einer Zeigemarkierung, die visuell an einem Anzeigebildschirm (10) ausgegeben wird, wobei das Verfahren umfasst:

   - Empfangen einer Eingabe von einer Zeigereinrichtung, um eine oder mehrere vorhergehende absolute Zeigepositionen und eine aktuelle absolute Zeigeposition ($P_{mot}(t)$) der Zeigevorrichtung innerhalb eines Hauptbetriebsbereichs (18) eines Anzeigeraums des Anzeigebildschirms (10) zu erhalten;
   - Bestimmen einer Zeigeverlagerung ($s$) der aktuellen absoluten Zeigeposition verglichen mit einer oder mehreren der vorhergehenden absoluten Zeigepositionen ($P_{mot}(t\text{-}1)$);
   - Bestimmen einer Geschwindigkeit ($v$) der Zeigereinrichtung und/oder der absoluten Zeigeposition;
   - Bestimmen einer Zeigeabweichung ($d$) der aktuellen absoluten Zeigeposition und/oder der einen oder mehreren vorhergehenden absoluten Zeigepositionen von einer vorhergehenden Position ($P_{disp}(t\text{-}1)$) der Zeigemarkierung in dem Anzeigeraum;
   - Erstellen einer aktuellen Position ($P_{disp}(t)$) der Zeigemarkierung in dem Anzeigeraum durch Verlagern der Position der Zeigemarkierung relativ zu der vorhergehenden Position der Zeigemarkierung durch bzw. um eine Markierungsverlagerung ($\hat{g}\cdot s$), wobei das Verhältnis der Markierungsverlagerung über die Zeigeverlagerung ($s$) durch einen Gain- bzw. Gewinn- bzw. Verstärkung-Parameter ($\hat{g}$) bestimmt wird, der eine stetige Funktion der bestimmten Geschwindigkeit ($v$) und der bestimmten Zeigeabweichung ($d$) ist, und zwar mindestens für Nicht-Null-Werte der Geschwindigkeit ($v$) und der Zeigeabweichung ($d$), so dass eine Zeigegenauigkeit verbessert wird.

2. Verfahren nach Anspruch 1, wobei der Minimalwert ($g_{min}$) des Gain-Parameters ($\hat{g}$) in dem Bereich von ca. 0,05 bis 0,5 liegt.

3. Verfahren nach einem der vorhergehenden Ansprüche, wobei der Maximalwert ($g_{max}$) des Gain-Parameters ($\hat{g}$) größer als 1 ist.

4. Verfahren nach einem der vorhergehenden Ansprüche, ferner umfassend das Bestimmen eines Verweilparameters ($w$), der die mittlere Abweichung der aktuellen absoluten Zeigeposition von einer Mehrzahl vorhergehender absoluter Zeigepositionen identifiziert, wobei die aktuelle Position der Zeigemarkierung mit dem Gain-Parameter ($\hat{g}$) als eine stetige Funktion des Verweilparameters ($w$) erstellt wird.

5. Verfahren nach Anspruch 4, wobei sich der Gain-Parameter ($\hat{g}$) nicht mit der bestimmten Geschwindigkeit ($v$) und der bestimmten Zeigeabweichung ($d$) ändert, wenn der Verweilparameter ($w$) unter einem unteren Verweilreferenzwert ($w_{min}$) liegt.

6. Verfahren nach Anspruch 5, wobei, wenn der Verweilparameter ($w$) größer ist als der untere Verweilbezugswert ($w_{min}$) und der absolute Wert der bestimmten Geschwindigkeit ($v$) niedriger ist als ein oberer Geschwindigkeitsreferenzwert ($v_{max}$), der Gain-Parameter ($\hat{g}$) von der Zeigeabweichung ($d$) abhängt.

7. Verfahren nach einem der vorhergehenden Ansprüche, wobei die aktuelle Position der Zeigemarkierung mit dem Gain-Parameter ($\hat{g}$) unabhängig von der bestimmten Geschwindigkeit ($v$) erstellt wird, wenn der absolute Wert der Zeigeabweichung ($d$) größer ist als ein oberer Abweichungsreferenzwert ($d_{max}$).

8. Verfahren nach Ansrpuch 4, wobei der Gain-Parameter ($\hat{g}$) eine monoton steigende Funktion zumindest eines der bestimmten Geschwindigkeit ($v$), der Zeigeabweichung ($d$) und des Verweilparameters ($w$) ist.

9. Verfahren nach einem der vorhergehenden Ansprüche, wobei
das Bestimmen einer Zeigeverlagerung ($s$) das Bestimmen einer horizontalen Verlagerung ($s_x$) und/oder einer vertikalen Verlagerung ($s_y$) der aktuellen absoluten Zeigeposition verglichen mit einer oder mehreren der vorhergehenden absoluten Zeigepositionen umfasst,
das Bestimmen einer Geschwindigkeit ($v$) das Bestimmen einer horizontalen Komponente der Geschwindigkeit ($v_x$) und/oder einer vertikalen Komponente der Geschwindigkeit ($v_y$) umfasst,
das Bestimmen einer Zeigeabweichung ($d$) das Bestimmen einer horizontalen Abweichung ($d_x$) und/oder einer vertikalen Abweichung ($d_y$) der aktuellen absoluten Zeigeposition und/oder einer oder mehrerer vorhergehender absoluter Zeigepositionen von einer vorhergehenden Position der Zeigemarkierung in dem Anzeigeraum umfasst, und
wobei die aktuelle Position der Zeigemarkierung erstellt wird durch Verlagern der Position der Zeigemarkierung horizontal und/oder vertikal relativ zu der vorhergehenden Position der Zeigemarkierung durch bzw. um eine horizontale Markierungsverlagerung ($\hat{g}_x \cdot s_x$) und/oder eine vertikale Markierungsverlagerung ($\hat{g}_y \cdot s_y$), wobei das Verhältnis der horizontalen Markierungsverlagerung über die horizontale Zeigeverlagerung ($s_x$) durch einen horizontalen Gain- bzw. Gewinn- bzw. Verstärkung-Parameter ($\hat{g}_x$) bestimmt wird, der eine stetige Funktion der bestimmten horizontalen Komponente der Geschwindigkeit $v_x$ und der bestimmten horizontalen Abweichung ($d_x$) ist, und zwar für Nicht-Null-Werte der horizontalen Komponente der Geschwindigkeit und der horizontalen Abweichung, und das Verhältnis der vertikalen Markierungsverlagerung über die vertikale Zeigeverlagerung ($s_y$) durch einen vertikalen Gain- bzw. Gewinn- bzw. Verstärkung-Parameter ($\hat{g}_y$) bestimmt wird, der eine stetige Funktion der bestimmten vertikalen Komponente der Geschwindigkeit ($v_y$) und der bestimmten vertikalen Abweichung ($d_y$) ist, und zwar für Nicht-Null-Werte der vertikalen Komponente der Geschwindigkeit und der vertikalen Abweichung.

10. Verfahren nach einem der vorhergehenden Ansprüche, wobei das Erstellen einer aktuellen Position der Zeigemarkierung umfasst:

- Bereitstellen einer Gain- bzw. Gewinn- bzw. Verstärkung-Auswertefunktion ($g$), die eine monotone differenzierbare Funktion der bestimmten Geschwindigkeit und/oder der bestimmten Zeigeabweichung und/oder des Verweilparameters ist;
- wenn die Gain-Auswertefunktion größer ist als Eins und die bestimmte Zeigeverlagerung ein dem Zeichen der bestimmten Zeigeabweichung entgegengesetztes Zeichen aufweist, wird der Gain-Parameter ($\hat{g}$) als 2-$g$ basierend auf der Gain-Auswertefunktion g erstellt; und
- wenn die Gain-Auswertefunktion ($g$) nicht größer ist als 1 oder wenn die bestimmte Zeigeverlagerung ein Zeichen aufweist, das nicht entgegengesetzt zu dem Zeichen der bestimmten Zeigeabweichung ist, wird der Gain-Parameter ($\hat{g}$) als die Gain-Auswertefunktion ($g$) erstellt.

11. Verfahren nach Anspruch 10 in Kombination mit Anspruch 4, ferner umfassend:

- Bestimmen eines standardisierten Geschwindigkeitsparameters ($\hat{v}$), der stetig und monoton von $\hat{v}_{min} = 0$ zu $\hat{v}_{max} = 1$ als eine Funktion der bestimmten Geschwindigkeit ($v$) steigt;
- Bestimmen eines standardisierten Abweichungsparameters ($\hat{d}$), der stetig und monoton von $\hat{d}_{min} = 0$ zu $\hat{d}_{max} = 1$ als eine Funktion der bestimmten Abweichung ($d$) steigt; und
- Bestimmen eines standardisierten Verweilparameters ($\hat{w}$), der stetig und monoton von $\hat{w}_{min} = 0$ zu $\hat{w}_{max} = 1$ als eine Funktion des Verweilparameters ($w$) steigt;

wobei die Gain-Auswertefunktion $g = g_{min} + \dfrac{1}{2}\left[1 - \cos(m \cdot \pi)\right]\left(g_{max} - g_{min}\right)$ mit einem Skalierungsparameter $m = \hat{w} \cdot \max(\hat{v},\hat{d})$ ist.

12. Verfahren nach Anspruch 10 oder 11, ferner umfassend das Empfangen einer Eingabe von einer Zeigereinrichtung, um eine aktuelle absolute Zeigeposition der Zeigereinrichtung innerhalb eines Umfangsbereichs des Anzeigeraums zu erzielen, wobei die Gain-Auswertefunktion monoton mit abnehmendem Abstand der aktuellen absoluten Zeigeposition in dem Umfangsbereich von einer Umfangskante bzw. -rand des Anzeigeraums steigt.

13. Zeigesystem, umfassend:

- eine Zeigereinrichtung, die angepasst ist, eine Benutzereingabe zu empfangen, die eine Mehrzahl aufeinanderfolgender Zeigepositionen definiert;

- eine Steuer- bzw. Regelkomponente, die angepasst ist, die Schritte gemäß eines Verfahrens nach einem der Ansprüche 1 bis 12 durchzuführen; und

- eine Anzeigekomponente, die angepasst ist, die erstelle aktuelle Position der Zeigemarkierung an dem Anzeigebildschirm auszugeben.

14. Zeigereinrichtung nach Anspruch 13, wobei die Zeigereinrichtung eine optische Detektionskomponente zum Detektieren eines unsichtbaren Lichtpunkts eines Laserzeigers an dem Anzeigebildschirm umfasst.

15. Computerprogrammprodukt, umfassend Programmcode, der, wenn in einem Computersystem geladen, das System veranlasst, die Schritte gemäß einem Verfahren nach einem der Ansprüche 1 bis 12 durchzuführen.

**Revendications**

1. Procédé mis en oeuvre par ordinateur pour commander une position ($P_{disp}(t)$) d'un marqueur de pointage qui est visuellement émis sur un écran d'affichage (10), le procédé comprenant

- la réception d'une entrée d'un dispositif pointeur pour obtenir une ou plusieurs positions de pointage absolu précédentes et une position de pointage absolu actuelle ($P_{mot}(t)$) dudit dispositif pointeur au sein d'une région de fonctionnement principale (18) d'un espace d'affichage de l'écran d'affichage (10);

- la détermination d'un déplacement de pointage (s) de la position de pointage absolu actuelle par rapport à une ou plusieurs des positions de pointage absolu précédentes ($P_{mot}(t-1)$) ;

- la détermination d'une vitesse (v) du dispositif pointeur et/ou de la position de pointage absolu ;

- la détermination d'un écart de pointage (d) de la position de pointage absolu actuelle et/ou de la ou des positions de pointage absolu précédentes à partir d'une position précédente ($P_{disp}(t-1)$) du marqueur de pointage dans l'espace d'affichage ;

- l'établissement d'une position actuelle ($P_{disp}(t)$) du marqueur de pointage dans l'espace d'affichage en déplaçant la position du marqueur de pointage par rapport à la position précédente du marqueur de pointage par un déplacement de marqueur ($\hat{g}$ s), dans lequel le rapport du déplacement de marqueur sur le déplacement de pointage (s) est déterminé par un paramètre de gain (g) qui est une fonction continue de la vitesse déterminée (v) et de l'écart de pointage déterminé (d) au moins pour des valeurs non nulles de la vitesse (v) et de l'écart de pointage (d) de sorte que la précision de pointage est améliorée.

2. Procédé selon la revendication 1, dans lequel la valeur minimale ($g_{min}$) du paramètre de gain (g) est dans la plage d'environ 0,05 à 0,5.

3. Procédé selon l'une quelconque des revendications précédentes, dans lequel la valeur maximale ($g_{max}$) du paramètre de gain (g) est supérieure à 1.

4. Procédé selon l'une quelconque des revendications précédentes, comprenant en outre la détermination d'un paramètre d'arrêt (w) qui identifie l'écart moyen de la position de pointage absolu actuelle parmi une pluralité de positions de pointage absolu précédentes, dans lequel la position actuelle du marqueur de pointage est établie avec le paramètre de gain ($\hat{g}$) qui est une fonction continue du paramètre d'arrêt (w).

5. Procédé selon la revendication 4, dans lequel le paramètre de gain (g) ne change pas avec la vitesse déterminée (v) et l'écart de pointage déterminé (d) si le paramètre d'arrêt (w) est inférieur à une valeur de référence d'arrêt inférieure ($w_{min}$).

6. Procédé selon la revendication 5, dans lequel, si le paramètre d'arrêt (w) est supérieur à la valeur de référence d'arrêt inférieure ($w_{min}$) et la valeur absolue de la vitesse déterminée (v) est inférieure à une valeur de référence de vitesse supérieure ($v_{max}$), le paramètre de gain (g) dépend de l'écart de pointage (d).

7. Procédé selon l'une quelconque des revendications précédentes, dans lequel la position actuelle du marqueur de pointage est établie avec le paramètre de gain (g) qui est indépendant de la vitesse déterminée (v) si la valeur absolue de l'écart de pointage (d) est supérieure à une valeur de référence d'écart supérieure ($d_{max}$).

8. Procédé selon la revendication 4, dans lequel le paramètre de gain (g) est une fonction augmentant de manière monotone d'au moins un élément parmi la vitesse déterminée (v), l'écart de pointage (d) et le paramètre d'arrêt (w).

9. Procédé selon l'une quelconque des revendications précédentes, dans lequel la détermination d'un déplacement de pointage (s) comprend la détermination d'un déplacement horizontal ($s_x$) et/ou d'un déplacement vertical ($s_y$) de la position de pointage absolu actuelle par rapport à une ou plusieurs des positions de pointage absolu précédentes, la détermination d'une vitesse (v) comprend la détermination d'une composante horizontale de la vitesse ($v_x$) et/ou d'une composante verticale de la vitesse ($v_y$), la détermination d'un écart de pointage (d) comprend la détermination d'un écart horizontal ($d_x$) et/ou d'un écart vertical ($d_y$) de la position de pointage absolu actuelle et/ou de la ou des positions de pointage absolu précédentes à partir d'une position précédente du marqueur de pointage dans l'espace d'affichage, et dans lequel la position actuelle du marqueur de pointage est établie en déplaçant la position du marqueur de pointage horizontalement et/ou verticalement par rapport à la position précédente du marqueur de pointage par un déplacement de marqueur horizontal ($\hat{g}_x \cdot s_x$) et/ou un déplacement de marqueur vertical ($\hat{g}y \cdot s_y$), dans lequel le rapport du déplacement de marqueur horizontal sur le déplacement de pointage horizontal ($s_x$) est déterminé par un paramètre de gain horizontal ($\hat{g}_x$) qui est une fonction continue de la composante horizontale déterminée de la vitesse $v_x$ et de l'écart horizontal déterminé ($d_x$) au moins pour des valeurs non nulles de la composante horizontale de la vitesse et de l'écart horizontal, et le rapport du déplacement de marqueur vertical sur le déplacement de pointage vertical ($s_y$) est déterminé par un paramètre de gain vertical ($\hat{g}_y$) qui est une fonction continue de la composante verticale déterminée de la vitesse ($v_y$) et de l'écart vertical déterminé ($d_y$) au moins pour des valeurs non nulles de la composante verticale de la vitesse et de l'écart vertical.

10. Procédé selon l'une quelconque des revendications précédentes, dans lequel l'établissement d'une position actuelle du marqueur de pointage comprend

   - la fourniture d'une fonction d'évaluation de gain (g) qui est une fonction différentiable monotone de la vitesse déterminée et/ou de l'écart de pointage déterminé et/ou du paramètre d'arrêt ;
   - si la fonction d'évaluation de gain est supérieure à un et le déplacement de pointage déterminé a un signe opposé au signe de l'écart de pointage déterminé, le paramètre de gain (g) est établi comme 2 - g en fonction de la fonction d'évaluation de gain g ; et
   - si la fonction d'évaluation de gain (g) n'est pas supérieure à 1 ou si le déplacement de pointage déterminé a un signe qui n'est pas opposé au signe de l'écart de pointage déterminé, le paramètre de gain ($\hat{g}$) est établi comme la fonction d'évaluation de gain (g).

11. Procédé selon la revendication 10 en combinaison avec la revendication 4, comprenant en outre

   - la détermination d'un paramètre de vitesse normalisée ($\hat{v}$) qui augmente de manière continue et monotone de $\hat{v}_{min}=0$ à $\hat{v}_{max}=1$ en fonction de la vitesse déterminée (v) ;
   - la détermination d'un paramètre d'écart normalisé ($\hat{d}$) qui augmente de manière continue et monotone de $\hat{d}_{min}=0$ à $\hat{d}_{max}=1$ en fonction de l'écart déterminé (d) ; et
   - la détermination d'un paramètre d'arrêt normalisé ($\hat{w}$) qui augmente de manière continue et monotone de $\hat{w}_{min} = 0$ à $\hat{w}_{max} = 1$ en fonction du paramètre d'arrêt (w) ;

   dans lequel la fonction d'évaluation de gain est $g=g_{min} + ½[1-\cos(m \cdot \pi)](g_{max}-g_{min})$ avec un paramètre de mise à l'échelle $m=\hat{w} \cdot \max(\hat{v},\hat{d})$.

12. Procédé selon la revendication 10 ou 11, comprenant en outre la réception d'une entrée d'un dispositif pointeur pour obtenir une position de pointage absolu actuelle du dispositif pointeur au sein d'une région périphérique de l'espace d'affichage, dans lequel la fonction d'évaluation de gain augmente de manière monotone avec une distance décroissante de la position de pointage absolu actuelle dans la région périphérique depuis un bord périphérique de l'espace d'affichage.

13. Système de pointage comprenant

   - un dispositif pointeur adapté à recevoir une entrée d'utilisateur qui définit une pluralité de positions de pointage absolu successives ;
   - un composant de commande adapté à réaliser les étapes conformément à un procédé selon une des revendications 1 à 12 ; et
   - un composant d'affichage adapté à émettre la position actuelle établie du marqueur de pointage sur l'écran d'affichage.

**14.** Dispositif de pointage selon la revendication 13, dans lequel le dispositif pointeur comprend un composant de détection optique pour détecter un point lumineux invisible d'un pointeur laser sur l'écran d'affichage.

**15.** Produit de programme informatique comprenant du code de programme qui, lors de son chargement dans un système informatique, provoque la réalisation par le système des étapes conformément à un procédé selon une des revendications 1 à 12.

Fig. 1

Fig. 2

# Fig. 3

ST10
determining velocity $v$

ST12
determining pointing deviation $d$

ST28
determining dwelling parameter $w$

ST30
determining border parameter $b$

ST14 — determining scaling parameter $m$

ST16 — gain evaluation function $g$

ST18 — $g > 1$ ? — no

yes

ST22 — $d \cdot s < 0$ ? — no

yes

ST24 — $\hat{g} = 2 - g$

ST20 — $\hat{g} = g$

ST26 — establishing current marker position

Fig. 4A

Fig. 4B

Fig. 4C

## Fig. 5A

## Fig. 5B

### Subjective user ratings

# Fig. 6

920

## SYSTEM MEMORY

### RAM

944 **APPLICATION PROGRAMS**

946 **PROGRAM DATA**

930 **ROM**

924

928

922 **PROCESSING UNIT**

960 **VIDEO I/O**

958 **MONITOR**

926 **SYSTEM BUS**

938 **HARD DISK DRIVE INTERFACE**

**EXTERNAL DISK DRIVE INTERFACE**

**PARALLEL PORT INTERFACE**

952 **SERIAL PORT INTERFACE**

**NETWORK I/O**

964

962 **REMOTE COMPUTER**

932

940

934

954

968

936

956 **PRINTER**

950 **MOUSE**

948

**MODEM**

966

970

**KEYBOARD**

EP 2 226 707 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MYERS et al.** Interacting at a distance: measuring the performance of laser pointers and other devices. *Proc. CHI '02,* 2002, 33-40
- **VOGEL et al.** Distant freehand pointing and clicking on very large, high resolution displays. *Proc. UIST'05,* 2005, 33-42
- **KÖNIG.** Position-independent interaction for large high-resolution displays. *Proc. IHCI '07,* 2007
- **JIANG et al.** Improving Awareness with Remote Control Point Movement Prediction in Real-Time Collaborative Graphics Editing Systems. *International Journal of Computer Science and Network Security,* March 2006, vol. 6 (3A), 203-207
- **FREES et al.** PRISM Interaction for Enhancing Control in Immersive Virtual Environments. *ACM Transactions on Computer-Human Interaction ACM USA,* May 2007, vol. 14 (1), 1-31
- **J. OH et al.** Laser pointers as collaborative pointing devices. *Proc. GI '02,* 2002
- **M. C. CHEN et al.** What can a mouse curser tell us more?: correlation of eye/mouse movements on web browsing. *Proc. CHI '01,* 2001, 281-282
- **P. FROLOV et al.** Using kalman filter for natural hand tremor smoothing during the interaction with the projection screen. *Workshop Proceedings VEonPC '2002,* 2002, 94-101
- **W. A. KÖNIG et al.** Position-independent interaction for large high-resolution displays. *Proc. IHCI '07,* 2007